Europäisches Patentamt

European Patent Office

Office européen des brevets

(11) Publication number: **0 080 340**
**B1**

# EUROPEAN PATENT SPECIFICATION

(45) Date of publication of patent specification: **27.08.86**

(51) Int. Cl.⁴: **G 03 B 3/10, G 02 B 7/11**

(21) Application number: **82306169.2**

(22) Date of filing: **19.11.82**

(54) **A device for detecting the focused state of an optical system.**

(30) Priority: **19.11.81 JP 185980/81**
**20.11.81 JP 186530/81**
**20.11.81 JP 186531/81**
**14.01.82 JP 4117/82**
**29.01.82 JP 13774/82**

(43) Date of publication of application:
**01.06.83 Bulletin 83/22**

(45) Publication of the grant of the patent:
**27.08.86 Bulletin 86/35**

(84) Designated Contracting States:
**AT BE CH DE FR GB IT LI NL SE**

(56) References cited:
**DE-A-2 708 507**
**DE-A-2 711 755**
**DE-A-3 021 887**
**DE-A-3 141 183**
**FR-A-1 528 189**
**FR-A-2 266 401**
**FR-A-2 308 119**
**FR-A-2 394 106**
**GB-A-1 477 625**
**US-A-3 333 105**
**US-A-4 060 725**

(73) Proprietor: **OLYMPUS OPTICAL CO., LTD.**
**43-2, 2-chome, Hatagaya Shibuya-ku**
**Tokyo 151 (JP)**

(72) Inventor: **Shishido, Yoshio c/o Olympus Optical**
**Co., Ltd.**
**No. 43-2 Hatagaya 2-chome**
**Shibuya-ku Tokyo (JP)**

(74) Representative: **Kennedy, Victor Kenneth et al**
**G.F. REDFERN & CO. Marlborough Lodge 14**
**Farncombe Road**
**Worthing West Sussex BN11 2BT (GB)**

Courier Press, Leamington Spa, England.

## Description

This invention relates to a device for detecting the focused state of an optical system.

In optical devices for observation or photography, such as endoscopes, cameras and television cameras, if an object is to be clearly observed or photographed, it is important to ensure that the image forming optical system of the device is in a correctly focused state providing a clear image formed at a predetermined position, such as a film surface. Therefore means for detecting whether it is in a focused state or not are generally provided. An automatic focusing device wherein an optical system is moved by a detecting signal of a device for detecting the focused state and to automatically set the optical system in a correctly focused state may be provided in some cases.

One known device provided with means for detecting the focused state of an optical system is the projector system described and claimed in British Patent No. 1 477 625, in which reflected light passing back through the optical system to a small aperture in a position optically conjugate to the image plane is monitored by a photo-electric transducer.

Another known device projecting light via an objective and monitoring reflected light in like manner to that described above is the system described and claimed in the French Patent No. 2 394 106, whilst a modification forming the subject of the French Patent No. 2 266 401 utilises the light receiving means to form a pinhole aperture.

The United States Patent No. 3 333 105 describes and claims a system for automatically measuring the distance of a plane, with especial reference to the automatic focusing of a camera, in which incident light from an image surface is projected via an objective to be monitored by a bridge circuit comprising two pairs of photo-resistors arranged in respective bridge circuits in separate planes, one behind the other, the foremost arrangement having a narrow central gap to transmit incident light through to the rearmost arrangement.

In every case, the monitored light originates from a location separate from the light receiving means. Therefore there have been problems that comparatively large spaces are required for the light projecting means and light receiving means, and the formation of the optical system and circuit system for detection of the focused state are complicated and costly.

One object of the present invention is to provide a device for detecting the focused state of an optical system, even for a dark object that is to be photographed or observed via an image forming optical system, the device having a simple structure, requiring little space, and being economical to manufacture, yet only requiring a single light path optical system.

According to the invention there is provided a device for detecting the focused state of an optical system in which the image of an object is formed on a predetermined surface by said optical system using a point light source to project light to the object via said optical system to be reflected by said object and received back via said optical system on a photo-electric transducer having a relatively small aperture at a position that is substantially optically conjugate with said image forming surface, characterised in that said point light source is formed by at least one aperture in said photo-electric transducer.

The invention will now be described with reference to the drawings, in which:—

Figure 1 is an explanatory schematic view showing an optical system of a focus setting device in which is used a first exemplary embodiment of the present invention, contained in a camera adapter fitted to accommodate a camera on an endoscope;

Figure 2 is an elevation showing a photo-electric element provided with a pinhole aperture;

Figure 3 is an elevation showing a photo-electric element having a rectangular slit provided;

Figure 4 is a schematic explanatory view showing the focusing operation of the optical system in Figure 1 as converted to that of a linear optical system;

Figure 5 is a graph showing the output characteristics of a photo-electric element when the position of an object to be photographed by an optical system is changed;

Figure 6 is a graph showing the output characteristics of a photo-electric element in an embodiment where infrared rays are used;

Figure 7 is an explanatory view showing the formation of a focus setting device wherein a photographing lens is moved and set in a well-focused position by using an electric circuit and an automatic exposure device;

Figure 8 is an explanatory view showing an optical system of a second exemplary embodiment of the present invention, with the device contained in a camera adaptor fitted to accommodate a camera on an endoscope;

Figure 9 is an elevation showing the shaping of apertures provided in a light intercepting plate on each side of a central transducer in the embodiment shown in Figure 8;

Figure 10 is a schematic explanatory view showing the operation of the focusing detection in the embodiment shown in Figure 8 as a linear optical system;

Figure 11 is an explanatory section showing details of a point light source and light receiving means used in a third exemplary embodiment of the present invention;

Figures 12(a) and 12(b) are respectively a section and elevation showing the parts of a light projecting means and light receiving means for focusing in a fourth exemplary embodiment of the present invention;

Figures 13 to 16 are general schematic explanatory views respectively showing four further exemplary embodiments of the present invention;

Figure 17 is a schematic explanatory view showing the optical system of yet another exemplary embodiment (the ninth);

Figure 18 is an explanatory diagram showing the parts of the point light sources and light receiving means in Figure 17 on an enlarged scale;

Figures 19(a) and 19(b) are graphs showing the relations of the output levels in respective cases of the non-focused state;

Figures 20 to 22 are respective explanatory views showing parts of light projecting means and light receiving means in tenth and twelfth exemplary embodiments of the present invention;

Figure 23 is a schematic explanatory view showing a hard endoscope incorporating a further exemplary embodiment of the present invention;

Figure 24 is a schematic explanatory view showing a soft endoscope in which a further embodiment of the present invention is incorporated; and

Figures 25 and 26 are explanatory sectional views showing respective embodiments in which an aperture for focusing detection is formed in a photo-electric element.

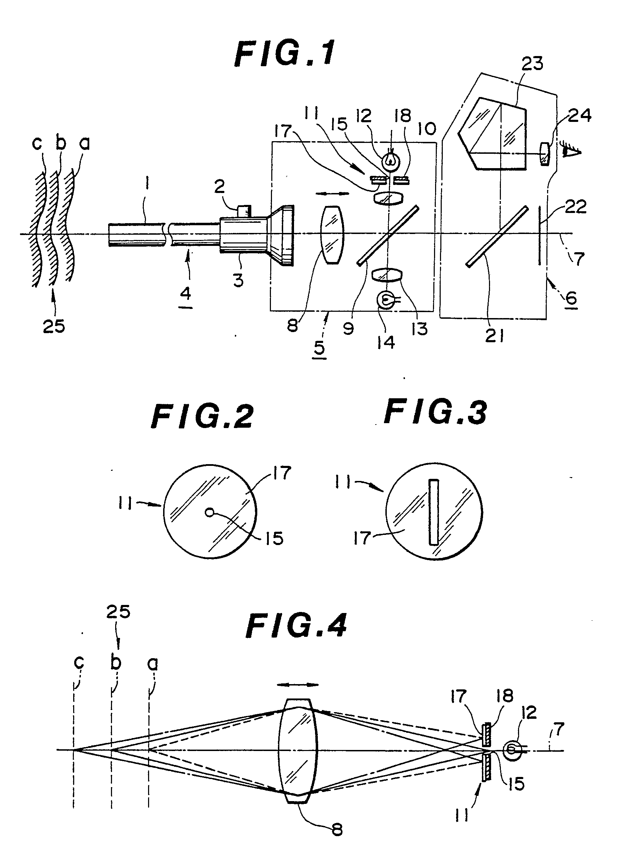

In the embodiment shown and described with reference to Figures 1 to 7, a camera adapter 5 that is required as an adaptor to accommodate a photographic device 6 is removably fitted to the rear end of an eyepiece 3 of an endoscope 4 formed of an elongate insertion sheath 1 containing an objective optical system between the tip of the eyepiece 3, which is at the rear end and has a light guide port 2 on one side and contains an eyepiece optical system. A photographic or television camera 6 is removably fitted to the rear of this camera adapter 5.

A device for detecting the correctly focused state of an optical system for automatically moving and setting a lens in the required focusing position using the first embodiment of the present invention is contained with the camera adapter 5.

A photographic lens 8 that is movable axially in each of the directions, as indicated by arrows with respect to an optical axis 7 is arranged to the rear of an eyepiece lens system of the endoscope 4 on the optical axis, assuming the endoscope 4 is fitted thereto. A semi-transparent focusing mirror 9 is arranged inclined with the optical axis 7 (for example, by 45 degrees) on the optical axis 7 to the rear of the photographic lens 8. An image relay lens 10, photo-electric element 11 and focusing light source 12 are arranged in turn on a deflected optical axis (to the upper side of Figure 1), on which light projected via the endoscope along the optical axis 7 is reflected by the focusing mirror 9. A lamp lens 13 and focusing indicator lamp 14 are arranged on the reflected optical axis (to the lower side of Figure 1) at the rear of the said focusing mirror 9.

The photo-electric element 11 is in the form of a disc (which may be shaped as a square or rectangle) and is provided with a central aperture such as a pinhole 15 (Figure 2) or a rectangular slit (Figure 3). On the front surface of this disc is formed a photo-electric transducer surface 17 of a light sensitive element, such element varying the current characteristics with light, as for example a photodiode or phototransistor, such element producing a photo-electric motive force as does a solar battery or varying its resistance value, as a CDS cell. To the rear of the disc 11 there is a light intercepting surface 18, so that the disc-shaped photo-electric element 11 is not directly hit by the light of the focusing light source 12 which is to the rear position of the pinhole 15, at the upper side of Figure 1.

On the other hand, a reflex mirror 21 inclined (for example, by 45 degrees) to the optical axis 7 is arranged on the optical axis 7 to the rear of the focusing mirror 9, in a camera 6 fitted to the rear of the said camera adapter 5. A photographic film 22 is arranged in a predetermined image-forming position further to the rear.

A pentaprism 23 turning the image laterally back to an erect image is arranged on the reflected optical axis of the said mirror 21, to the upper side in the illustration and a finder lens 24 is arranged on the optical axis through this pentaprism 23, so that the same optical image formed on the film 22 can be observed by eye through the finder lens 24. In the case of photography, the above mentioned reflex mirror 21 will retreat, so that the incident light will form an image on the film surface.

The position of the photo-electric surface 17 of the photo-electric element 11 is so arranged as to be optically conjugate with the position of the surface of the film 22.

That is to say, the light path length for light passing through the photographic lens 8 is made to form an image on the surface of the film 22 and the light path length reflected by the focusing mirror 9 to form an image on the photo-electric surface 17 of the photo-electric element 11 through the image relay lens 10 are mutually equal.

The principle of the correct focusing detecting function in the camera adapter 5 containing the device using the first embodiment of the focusing detecting device having the thus arranged optical system shall be first explained with reference to Figure 4, in which the optical system is simplified to be a linear optical system, and then the operations of the focusing detection device and focusing setting device shall be explained. In Figure 4, the light of the focusing light source 12 will be assumed to proceed along the optical axis 7 through the pinhole 15 of the photo-electric element 11 and projected toward the object 25 that is to be photographed by the photographic lens 8. The light projected and reflected by the object to be photographed will return back to the photo-electric element 11 via the photographic lens 8. Now, when the object 25 that is to be photographed is in the position indicated by reference symbol *b*, the focusing shall be made and the position in case the object to be photographed is too near or too far than it should be indicated respectively by the positions *a* and *c*. (The reference symbols *a* and *c* correspond respectively to the front focus and rear focus.)

In the above-mentioned case, the projected light image will be formed as a pinhole-shape in the position *b*, the light reflected in this position will become a convergent point (image forming point) and therefore no light will reach the photo-electric surface 17 surrounding this pinhole 15. On the other hand, the light projected on a spot in the position *a* will expand and the light reflected in this position will have the rear position of the above-mentioned pinhole 15 as a convergent point and will therefore reach the photo-electric surfaces 17 on the outer periphery of the pinhole 15, and a signal produced by this light. In the same manner, light reflected by an object in the position *c* will form a convergent point in front of the pinhole 15, and will then expand to reach the photo-electric surface 17 and produce a signal from the photo-electric element.

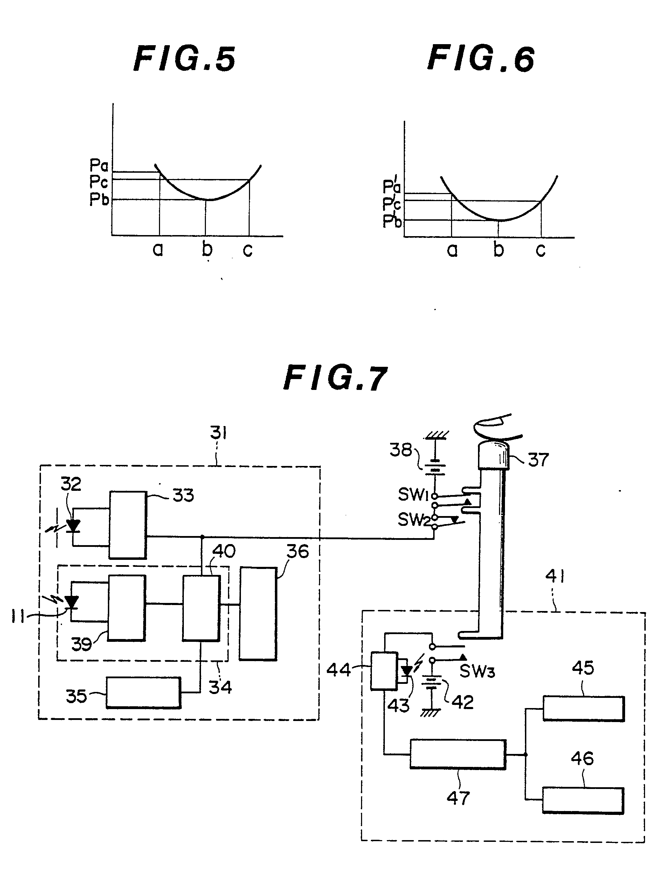

In the above description, only the light for the focusing light source 12 has been considered. However, in fact, not only said light, but also such external light as may be produced by an illuminating light through a light guide, for example, in an endoscope, may be incident, and therefore, the output signal of the photoelectric element 11 may be polluted by the output level by the above described external light, as shown in Figure 5, in which the abscissa represents the positions of the object to be photographed and the ordinate represents examples of detecting output levels of the photo-electric element 11.

When the object 25 to be photographed is in the focused position, that is, the position *b*, the output level Pb of the photo-electric element 11 will be minimum and, even if it is too near or too far, the respective signal output levels Pa and Pc will be larger.

Thus, the position in which the signal output is minimum will be a well focused position in this embodiment. Therefore the position of the photographic lens 8 in which the output of the photographic element 11 is made minimum by moving the photographic lens 8 with respect to the object 25 at any distance will be a focusing position. Therefore, with such camera photography a clear photographic image can be made. In case the photographic lens 8 is moved, the direction in which the output level becomes smaller will be shown to approach the correct focusing position, since before the photographic lens is moved automatically it may be manually or semiautomatically moved in this direction. In the case of automatically setting the focusing, if the movement is stopped at a point where the output level begins to become larger, or no longer varies with movement of the photographic lens 8, the photographic lens 8 will be able to be set in the focused position for the object 25 at any distance.

The above-described principle can be applied in exactly the same extent to the optical system within the camera shown in Figure 1, except that the image relay lens 10 and focusing monitor mirror 9 are arranged in the path to the photoelectric element 11 to the rear of the photographic lens 8, and that the endoscope 4 is arranged in the path to the object 25 in front of the photographic lens 8.

In the camera adapter 5 shown in Figure 1, in the event that correct focusing is made, a focused indicator lamp 14 will light, as described later, and this light will be condensed by a lamp lens 13 to be reflected by the reflex mirror 9, and proceed rearward along the optical axis 7 to be incident upon the eye of an observer via the return mirror 21, pentaprism 23 and finder 24. Therefore, if photography is intended, when the above-mentioned focusing indicator lamp 14 lights, a clear photograph can be made.

If an infrared light source, having light emitting characteristics in an infrared range, is used for the above described focusing light source 12, and an element having favourable detecting characteristics in an infrared range is used for the photoelectric element 11, adverse influences upon the illuminating light by other external lights incident upon the photo-electric element 11 will reduce for the general observation and photographing, as shown in Figure 6, and the detecting capacity and setting capacity for the focusing position will improve. That is to say, when the said light source and photoelectric element are used, the output level characteristics of the photo-electric element for the position of the object 25 to be photographed will improve in signal-to-noise ratio to be higher than that for Figure 5. In other words, the output levels Pa' and Pc' respectively, in the displaced positions indicated by the reference symbols *a* and *c* against the output level Pb' in the focusing position indicated by *b* will be relatively smaller than in the above-described case, and the amount of variation of the output level for the displaced position, for example, of *a* from the focusing position will be Pa'/Pb', and will be larger than the amount of variation Pa/Pb in the above-described case.

Figure 7 shows a focusing setting device wherein the photographic lens 8 of Figure 1 is automatically moved and set in the correctly focused position by using the first embodiment of the above-described device for detecting focusing and an automatic exposure device using an electric circuit.

This device 31 for setting the focusing comprises a light emitting circuit 33, which makes a focusing lamp 32 (corresponding to the focusing light source 12) emit a light and projects the light onto the object 25 that is to be photographed, a focus monitoring circuit 34 which amplifies the signal output having detected the light reflected by the object 25 by said photo-electric element 11, provided with an aperture such as the pinhole 15, and detects whether precise focusing is made or not, an indicator 35 (corresponding to the above-mentioned focusing indicating lamp 14) being provided to indicate the time of precise focusing, together with a photographic lens driving device 36 which moves the photographic lens 8 in order to set it in the correctly focused position.

The above mentioned light emitting circuit 33 is so formed that, for example, when a release button 37 is pushed, a switch SW1 will be switched to on from off (while a delayed break switch SW2 will be also kept on) to light such a focusing lamp 32, e.g. a LED. The above mentioned focusing detecting circuit 34 comprises an amplifier 39 amplifying the output signal of the photo-electric element 11 and a comparator 40. This comparator detecting circuit 40 is so formed that, for example, in the event that said driving device 36 moves the photographic lens 8 forward and rearward at a fixed velocity, detecting signals (amplified by the amplifier 39) will be put in in turn at proper intervals, in such case, the signal value put in before and the signal value put in following it being compared with each other, and when the signal put in later becomes equal to or larger than the signal put in before, a sensing signal will be put out to stop the driving device 36 and move the photographic lens 8 in the reverse direction until, when said sensing signal is set at a proper time constant and is integrated, and the integrated output is above a given value, or when the number of sensing signals at given intervals is counted and the value is above a given value, the indicator 35 will be illuminated and the operation of the driving device 36 will be stopped.

On the other hand, when the release button is strongly pushed to move further, a third switch SW3 will now be moved off to on, (the second switch SW2 will now be opened so that the focusing setting device 31 will not operate) and the switch SW3 operates the automatic exposure (EE) device 41 described below.

This EE device 41 comprises an amplifier, and, when the switch SW3 is closed, electric power will be fed from a current source 42 to amplify the detecting signal of a light measuring photo-electric element 43 and feed this signal to an EE controlling circuit 47 which separately controls the shutter speed of an EE shutter 45 and a light level controlling circuit 46 which sets the level of light produced by the photographic light source (the illuminating light source provided in an endoscope) so that, when the above mentioned switch SW3 is set conductive, the EE controlling circuit 47 will operate to adjust the shutter speed and light amount to the required values.

In the focusing setting device 31 formed as mentioned above, the photographic lens 8 will be moved and set in the correct focusing position by the following operations.

When the release button 37 is pushed with a finger or the like, to set the switch SW1 conductive, the light emitting circuit 33 will energise the focusing lamp 32, light will pass through a small hole, such as the pin-hole 15 (Figure 2) to pass on through the image re-forming lens 10, and be deflected by the focusing mirror 9 to be projected onto the object 25 through the photographic lens 8. The light reflected by the object 25 that is to be photographed will pass back to the photographic lens 8, will be deflected by the focusing mirror 9 and proceed to the photo-electric element 11 provided with the pinhole 15. If the photographic lens 8 is in the correct focusing position for the object 25 to be photographed, the output level of the photo-electric element 11 will be at a minimum value. Therefore, in this case, as the driving device 36 moves the lens 8 forward, for example, the output level will increase, therefore the advancing operation will be immediately stopped, the comparator detecting circuit 40 will put out a sensing signal, and the driving device 36 will move the lens 8 in the reverse direction. Even in this case, the output level will soon begin to increase, and therefore the sensing signal will be emitted, the operation of moving this lens 8 rearward will be stopped, the lens 8 will be moved back again in the original direction (that is, forward) and thus the lens 8 will slightly vibrate on the optical axis 7. In this case, the sensing signal will be emitted by the comparator detecting circuit 40 and therefore, if it is passed through an integrating circuit or counting circuit having a proper time constant, the output will be above a given value and the slight vibrating operation will stop.

On the other hand, if the lens 8 is initially displaced from the focusing position, if the driving device 36 first moves the lens 8 in the direction away from the correct focusing position, the output level of the photo-electric element 11 will (gradually) become larger, and therefore the comparator detecting circuit 40 will control the driving device 36 to move the lens 8 in the reverse direction, as is described above. When the lens 8 passes through the focusing position, the same slight vibrating operation as is described above will be repeated and the lens 8 finally set in the correct focusing position.

When the lens 8 is thus set in the correct focusing position, an indicator 35, such as the focusing indicating lamp 14 will light up. Therefore, when the observer sees this and strongly pushes the release button 37 further down, the EE device 41 will operate and a photograph will be taken. In this case, the EE device 41 can be operated simultaneously when operatively connected, or continuously in circuit. Also, the indicator 35 may be made to operate a buzzer or the like instead of lighting a lamp.

In the above described embodiment, the focusing detecting device and focusing setting device are provided in the camera adapter 5 for accommodating a camera or television camera fitted to the endoscope 4. However, needless to say, the present invention is not limited to this embodiment but can be applied to any optical instruments or optical devices in which correct focusing to form a clear image on a predetermined surface by moving a lens is important, as in ordinary cameras. In this case, the term photographic lens will refer to some or all of the lenses used for forming images in the optical instruments that may be moved forward and rearward along the axis of the optical system.

In the above described embodiment, the focusing detecting light is projected toward the object 25 that is to be photographed through a small aperture such as the pinhole 15 or a slit-shaped narrow aperture formed in the photo-electric element 11, the light projecting means and light receiving and focusing state detecting means are efficiently used so that the projected light reflected by the object 25 to be photographed will be received by the photo-electric element 11 having the above mentioned aperture formed to detect the state of focusing, and therefore there are advantages that the detecting device can be contained in a small space and can be realised with a simple structure at a low cost.

Also, the focusing detecting device has a light projecting means so that, by adjusting the light level, it can be used for a dark object to be photographed, or in a low power photographic optical system, a common photographic light path can be used, (although not essential) and therefore there are advantages that the focusing state detecting device of the present invention can be applied to any such optical device when there is no other space available than for providing a single-path photographic optical system, as in an endoscope, and can be used in a wide range of uses.

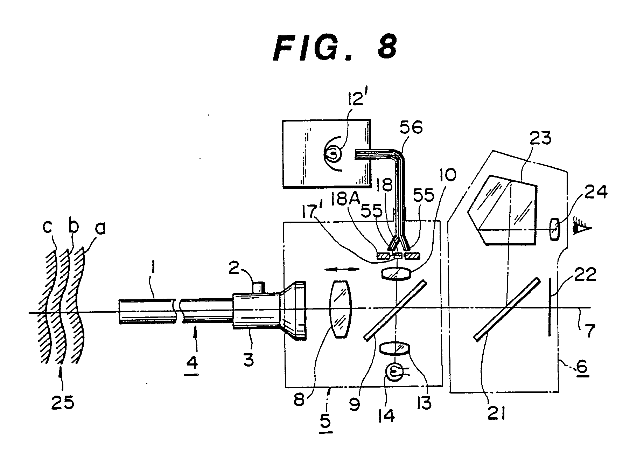

Figure 8 is a second exemplary embodiment of the invention, wherein a light projecting means and light receiving means which are essential parts of the present invention are formed in the following manner.

In this Figure, the same reference numerals are used for those elements that are the same as in the first embodiment. This applies in similar fashion to the later described embodiments.

In this second exemplary embodiment, plural apertures are provided in the point light source and receiving means for focusing detection.

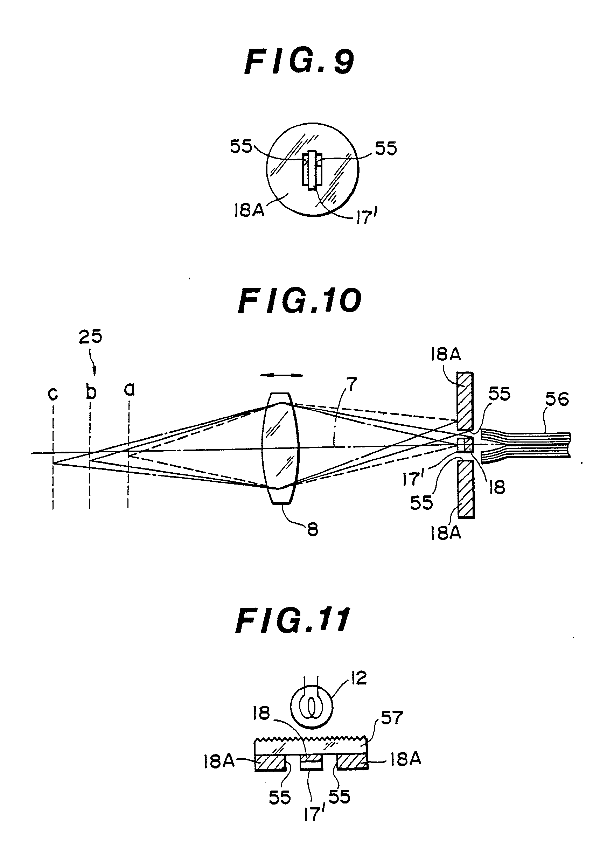

A light receiving means having an elongate photo-electric surface 17' and a surrounding light intercepting surface 18A defining slit-shaped apertures 55 formed on each side of the photo-electric surface 17' as shown in Figure 9, is arranged behind (above in the illustration) the image relay lens 10 on the deflected optical axis from the focusing mirror 9. The branched emitting end surfaces of a light guide 56 are arranged so as to be positioned respectively to the rear of the slit-shaped apertures and the light projecting means is so formed that the illuminating light of an external focusing light source 12' fed to the other end surface of this light guide 56 may be projected as a spot onto the object 25 through the apertures 55.

The apertures 55 and photo-electric surface 17' are arranged in a position optically conjugate with the film 22, and the light intercepting plate (layer) 18 is formed on the back of the photo-electric surface 17' so that the illuminating light from the light guide 56 may not be directly incident upon the detector.

The focusing detecting function in this second embodiment will be explained with reference to Figure 10, which simplifies the optical system by showing it as a linear configuration.

As shown in Figure 10, the illuminating light for focusing detection, emitted from the light guide 56 will pass through the slit-shaped apertures 55, and through the lens 8 to be projected toward the object 25.

As described above, when the object 25 is in the position indicated by the broken line b with respect to the lens 8, correct focusing will be achieved and the position nearer and farther than this position are indicated respectively by broken lines a and c.

In the above mentioned case, for example, as illustrated, the light emitted from one aperture 55 (on the optical axis 7) and reflected in the position shown by the line b will pass through the photographic lens 8, will have a convergent point (image forming point) in the position of the aperture 55 and therefore will not reach the photo-electric surface 17' adjacent to this aperture 55.

On the other hand, the light reflected by an object 25 in the position of the broken line a will have a convergent point in a position to the rear of the aperture 55 and will therefore reach the photo-electric surface 17' adjacent to the aperture 55 as illustrated to produce a signal output. In the same manner, the light reflected by an object in the position of the broken line c will already have a convergent point at a position in front of the aperture 55, and will then expand to reach the photo-electric surface 17' and give a signal output.

In the above description, the light emitted from one aperture 55 has been described, but the case for the other aperture 55 is the same.

That is to say, the illuminating lights will be projected toward the object 25 through both apertures 55 and will be received on the photo-electric surface 17', therefore the reflected light from objects out of correct focus will be superposed and detected on the photo-electric surface 17', and the photo-electric surface 17' will function more effectively than an embodiment in which it is provided only on the optical axis 7. In Figure 9 or 10, the photo-electric surface 17' is formed only between the apertures 55, but if the photo-electric surface 17' is formed to extend on the light intercepting surface 18A around both apertures 55, the amount of light incident when the object is not clearly focused will be increased and the focusing detecting sensitivity and SN ratio will be improved.

Figure 11 shows details of a third embodiment wherein is formed a focusing detecting light projecting means (and receiving means) not projecting the light from an external light source 12' through the light guide 56, as is shown in Figure 8 but directly projecting the light from a light source 12 in the form of a high brightness light-emitting diode at the rear of the apertures 55. In this case, the brightness of the light beams emitted from the respective apertures 55 by the light source 12 will be likely to vary across the beam paths. However, if a glass plate 57 is bonded to the back surface of the light intercepting members 18 and 18A, as illustrated, and a light dispersing surface such as a frosted surface is formed on the face of the glass plate 57 opposed to the light source 12, the above mentioned brightness variations can be substantially suppressed. The position of the aperture 55 or photo-electric surface 17' is arranged in the position optically conjugate with the film 22, as described above.

In the arrangement shown in Figure 11, if the photo-electric surface 17' is formed not only between the apertures 55 but also outside on the light intercepting surfaces 18A, the focusing detecting sensitivity and SN ratio can be improved.

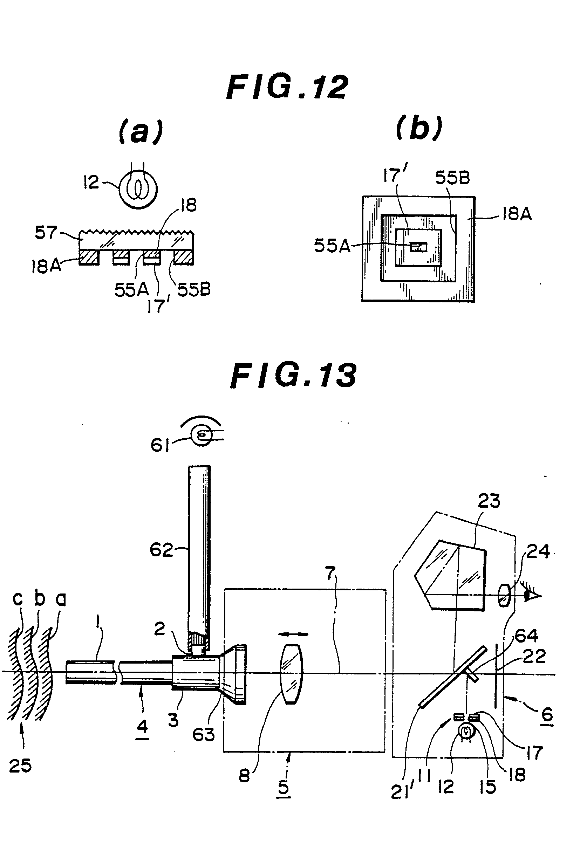

Figure 12 shows details of a fourth embodiment, in which the light receiving means of Figure 9 is improved.

As shown in Figure 12(a) a photo-electric surface 17' is provided in the form of a band enclosing the outer periphery of a rectangular (or square) aperture 55A, and a further aperture 55B is formed as a band around the outer periphery of the photo-electric surface 17', enclosed by a light intercepting surface 18A (or, if a photo-electric surface is further formed, it will be effective). A light intercepting surface 18 is formed on the back face of the above mentioned photo-electric surface 17', a further glass plate 57 is bonded to the back faces of the light intercepting members 18 and 18A, and a light dispersing surface is formed on the face of this glass plate 57 opposed to the light source 12. In this case, too, the position of the apertures 55A and 55B, or the photo-electric surface 17' is arranged in the position optically conjugate with the image forming surface, such as the film 22.

If this embodiment is used, the projected light level for focusing detection is considerably increased, the area of the photo-electric surface 17' can be made wider, the light level indicative of non-focusing will be superposed so as to be more readily detected and therefore the focusing detecting sensitivity and SN ratio further improved, to a higher level than in the above described embodiments.

In the above mentioned second to fourth embodiments, the respective apertures 55, 55A and 55B may be actual apertures or light transparent parts through which light passes, and can therefore be formed of a transparent glass or the like. Also, the shapes of the (optical) apertures 55, 55A and 55B are not limited to those illustrated. For example, in Figure 12, the photo-electric surface 17' or apertures 55A and 55B can be of concentric annular form.

Figure 13 shows a fifth exemplary embodiment wherein the light projecting and receiving means for focusing detection that were arranged and contained within the camera adaptor 5 in the first described embodiment are contained in a camera 6.

The illuminating light led to the light guiding mouthpiece part 2 of the endoscope 4 through a light guiding cable 62 from an illuminating light source 61 will pass through the light guide within the inserted part 1 and will be projected onto the object 25 from the tip of the inserted sheath part 1. The light reflected by the illuminated object 25 will pass through the lens 8 contained within the camera adapter 5 fitted to the eyepiece part 63 of the endoscope 4, and pass on to the rear of the optical axis 7 of the optical system to be incident upon the camera 6 fitted at the rear of the camera adapter 5.

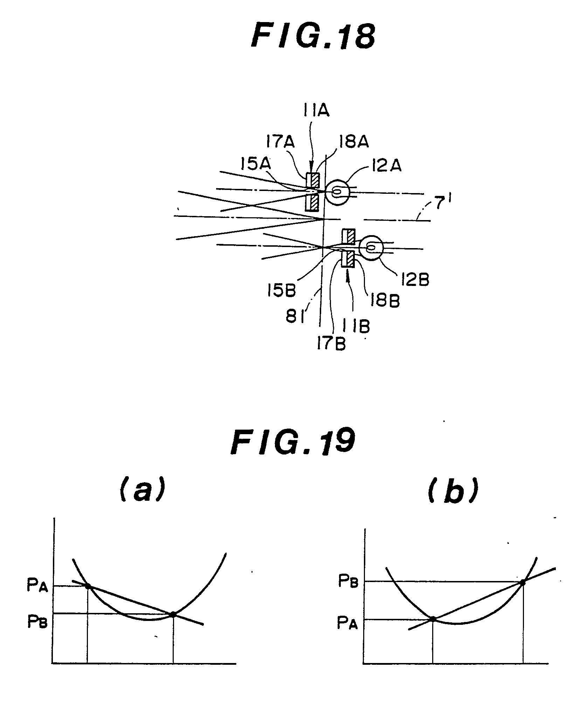

A return mirror 21' having a reflecting surface inclined by a predetermined angle (for example, 45 degrees) for light incident on the optical axis 7 within the camera body 6 at the rear of the lens 8, is mounted so as to be retractable and withdrawn from the light path, e.g. by rotating from the position shown in Figure 18, at the time of taking a photograph by exposing a photographic film 22 arranged in the rear at a predetermined distance on the optical axis. A focusing detecting mirror 64 is fitted to this return mirror 21', and has a reflecting surface vertical to the reflecting surface of the return mirror 21' arranged on the optical axis.

The return mirror 21' is so formed as to reflect a substantial part of the incident light, but to pass a part of the incident light to the focusing mirror 64 positioned on the optical axis 7 slightly to the rear (in this case, the light will not pass on to the film 22 at the rear of the focusing mirror 64). A focusing detecting photo-electric element 11 having a light-receiving surface is arranged normal to the optical axis of the light deflected by the focusing mirror 64 (to the lower side in the drawing). This photo-electric element 11 is arranged in the position conjugate with the optical distance (light path length) forming an image on the film 11 for incident light from the object 25 in front of the insertion sheath 1, and a pinhole-shaped aperture 5 is formed in the central part of the photo-electric surface 17 on the front face, as in the first embodiment, and a light intercepting surface 18 formed on the back surface, so that light from the light source 12 for focusing detection (spot illumination) may not directly reach the photo-electric surface 17.

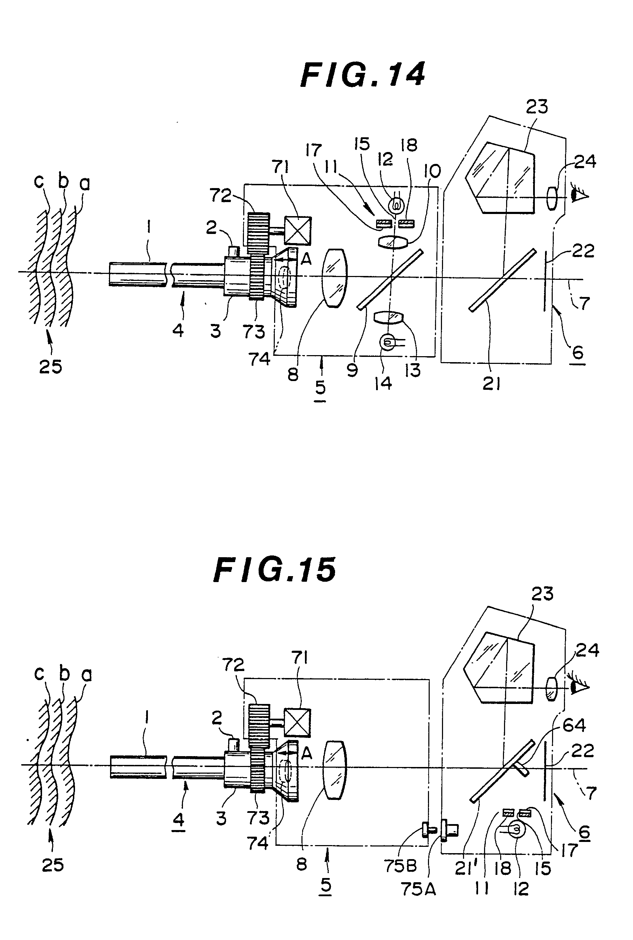

In the above-described respective embodiments, whether the photographic optical system is in a focusing state in which the image of the object 25 to be photographed is clearly formed on the predetermined image forming surface or not is detected and the photographic lens 8 within the camera adapter 5 is moved to automatically adjust the focusing state but, as shown in Figures 14 to 16 adjustable focusing means may be provided in the eyepiece part of the endoscope.

In the sixth exemplary embodiment shown in Figure 14, the camera adapter 5 and the optical system of the camera 6 are arranged in the same manner as described for the first embodiment shown in Figure 1.

A driving motor 71 serves as the driving device 36 controlled by the signal output of the focusing detecting circuit 34 described with reference to the first embodiment, and is arranged within the camera adapter 5, and a gear 72 is fitted to the tip of the shaft of the motor 71 and formed to mesh with a focusing ring 73 formed on the outer periphery of the endoscope eyepiece 63 when the camera adapter 5 is fitted to the endoscope 4.

When the above mentioned focusing ring 73 is rotated, an eyepiece lens 74 contained within the eyepiece 63 will move forward or rearward, as shown by an arrow A, moving along the optical axis 7 together with an eyepiece frame (not illustrated) and a clear optical image can be formed on the film surface.

As the driving motor 71 rotates, the focusing ring 73 meshing with the gear 72 will be rotated, the eyepiece 74 will be moved forward or rearward, the output levels by the focusing detecting circuit 34 (see Figure 7) will be compared before and after the respective movements, for example, at predetermined intervals, the rotating direction of the driving motor 71 will be controlled by these compared outputs so as to move the eyepiece 74 in the direction in which the output level will gradually become smaller, and the rotation of the driving motor 71 will be stopped in the position in which the output level will become minimum, as described above, to set the photographic optical system in the correctly focused state for the object 25 at any distance.

Figure 15 shows the seventh exemplary embodiment wherein the light projecting means and light receiving means for focusing detection are contained in the camera 6.

In this case, the detecting signal by the photo-electric element 11 within the camera 6 will be transmitted to the camera adapter 5 by the connection of a connector plug and socket 75B to control the driving motor 71.

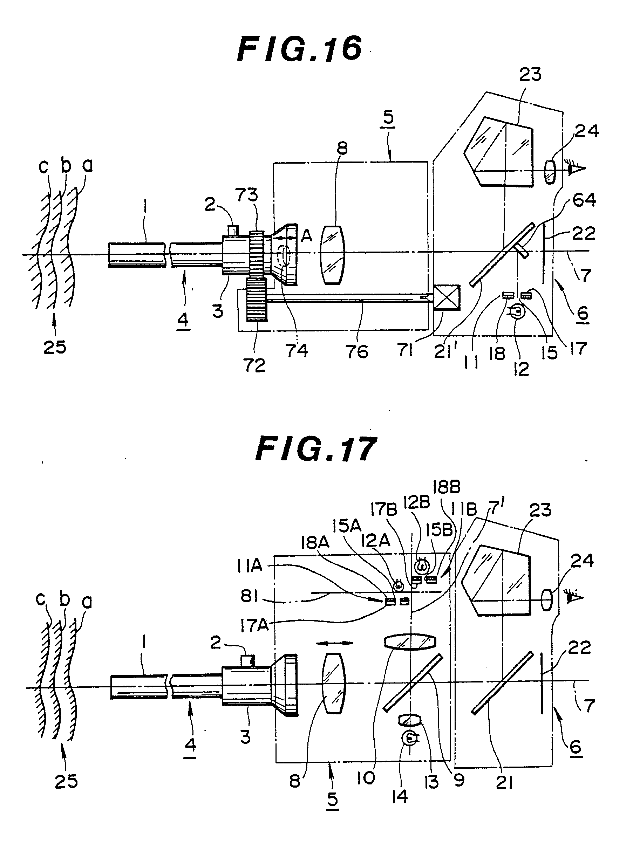

Also, the driving motor 71 need not be contained in the camera adapter 5 but can be contained in the camera 6, as shown in the eighth exemplary embodiment illustrated in Figure 16, for example.

In the eighth embodiment, shown in Figure 16, the motor 71 is contained in the camera 6 and is so formed as to be controlled by the signal of the focusing detecting circuit 34 (see Figure 7) in which focusing is detected by measuring the light amount received by the light receiving means. The rotary shaft of this motor 71 is so formed that, in case the camera 6 and camera adapter 5 are fitted, the rotary shaft will be connected with a shaft 76 passing through the camera adapter 5, for example, having a locking groove formed to engage and transmit the rotation of the motor 71 to a gear 72 attached to the tip of the shaft 76. The operation of this embodiment is substantially the same as of the above-described seventh embodiment.

In the above mentioned Figures 14 to 16, the eyepiece lens 74 forming part of the observing optical system is said to be movable. However, it is evident that, in case the objective optical system is movable, or a relay lens system is used for the image transmitting means, even if at least a part of the relay lens system is movable, the present invention can be applied.

The focus adjusting means of the endoscope 4 can be in the form of a rack and pinion, which may be driven by the driving device.

Figure 17 shows the ninth exemplary embodiment, wherein two of the light projecting and receiving means for focusing detection described in the first embodiment are used.

Photo-electric elements 11A and 11B similar to the photo-electric element 11 described with reference to the first embodiment are arranged on opposite sides of but adjacent to the optical axis 7' to the rear of the image relay lens 10 on the optical axis 7' of light deflected by the focusing mirror 9. Light projecting light sources 12A and 12B for focusing detection are arranged respectively just after the apertures 15A and 15b of the respective photo-electric elements 11A and 11B.

Further, light intercepting surfaces 18A and 18B are formed on the back surfaces of the respective photo-electric elements 11A and 11B.

The photo-electric elements 11A and 11B are arranged equally spaced to the front and rear of a position 81 that is optically conjugate with the film surface 22 arranged in a predetermined image forming position.

Therefore, the light path length in case the lights emitted from the respective light sources 12A and 12B and passed through the lens 8 are reflected by an object 25 positioned to form a clear image on the film 22 surface, and the light path length forming the image in the intermediate position 81 when the returning light beams are deflected by the focusing mirror 9, pass through the image relay lens 10 to the respective photo-electric surfaces 17A and 17B of the photo-electric elements 11A and 11B are so set as to be equal to each other.

The principle of focusing detection in the thus arranged optical system will be explained with reference to Figure 18.

In Figure 18, the light beams passing through the respective apertures 15A and 15B and through the photographic optical system to be projected as spots onto the object 25 will be partly reflected by the object 25, pass back through the photographic optical system and return to the respective photo-electric elements 11A and 11B. In this case, if the photographic optical system is in the correctly focussed position for the object 25 the image forming point (convergent point) of the respective incident lights will be in the intermediate position 81 and therefore the outputs of the photo-electric elements 11A and 11B arranged at substantially equal distances in front and rear of this position 81 will be mutually equal.

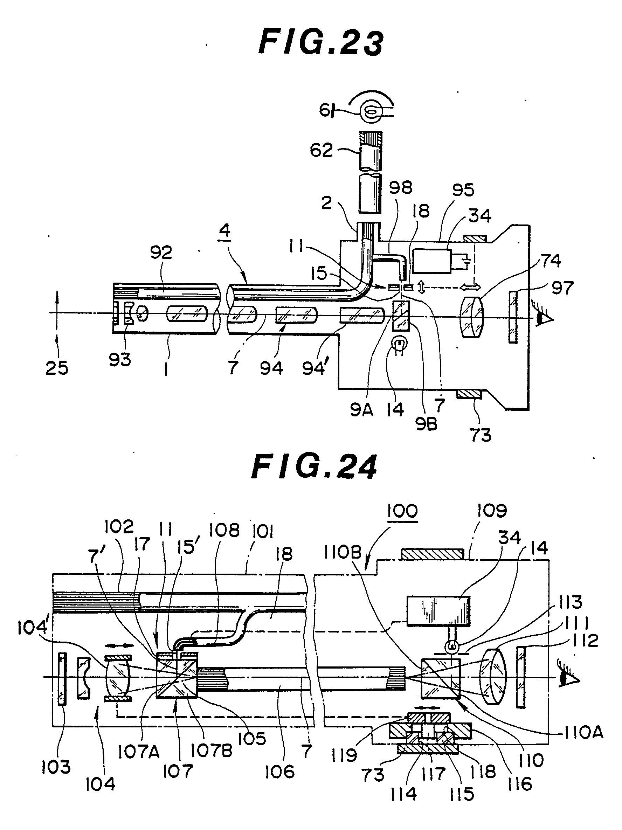

On the other hand, if the object 25 is at the position of the line a in Figure 24, the image forming point will be to the rear of the intermediate position 81, and therefore the amount of light reaching the photo-electric surface 17A of the photo-electric element 11A arranged in the front will become larger than that reaching the element arranged to the rear. That is to say, in this case, as shown in Figure 19(a), the (detecting) output PA of the photo-electric element 11A on the front side will become larger than the output PB of the photo-electric element 11B.

On the contrary, in the case of an object 25 being at the position of the line $c$, the amount of light reaching the photo-electric surface of the photo-electric element 11B arranged to the rear will become larger. That is to say, as shown in Figure 19(b), the output PB of the photo-electric element 11B will become larger.

Therefore, when the detecting outputs PA and PB of both photo-electric elements 11A and 11B are compared with each other by using a comparator formed of a differential amplifier or the like, it is possible to determine whether they are equal, or which detecting output is larger, giving the state of focusing and direction of any required correction.

If the outputs PA and PB of the photo-electric elements 11A and 11B are equal, the correct focusing state exists. If they are not equal to each other, for example, if PA is greater than PB, as is the case in Figure 19(a), if the photographic lens 8 is moved forward, that is, toward the object 25, the correct focusing state will be approached. Therefore, if the photographic lens 8 is moved to the position in which both outputs PA and PB become equal, and is stopped in this position, it will be set in the correct focusing state.

On the other hand, if PA is less than PB if the photographic lens 8 is moved in the reverse direction, that is, rearward, it will be able to be set in the correct focusing state.

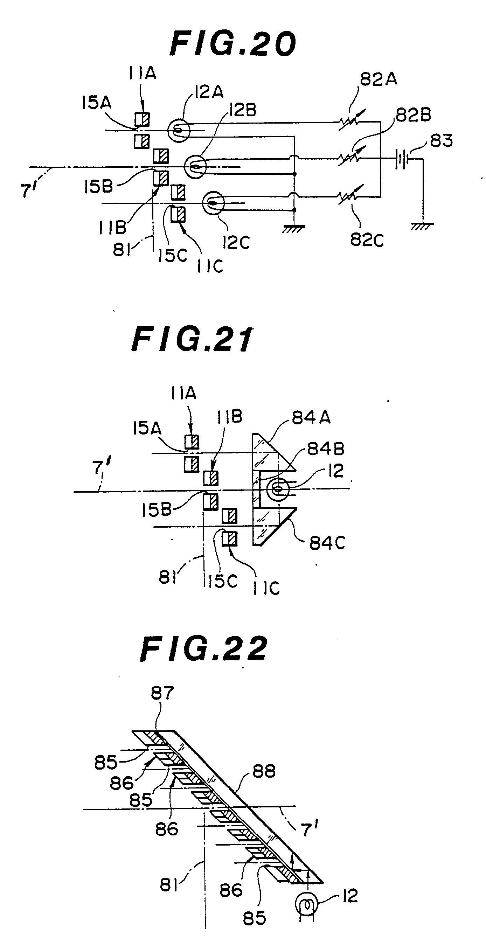

Figure 20 shows the tenth exemplary embodiment, wherein three similar light projecting and receiving means for focusing detection are used.

In this embodiment, a photo-electric element 11B having aperture 15B is arranged in the position 81, conjugate with the film 22 surface, but on the optical axis 7', and photo-electric elements 11a and 11C having respective apertures 15A and 15C are arranged respectively to the front and rear of the element 11B. Respective light sources 12A, 12B and 12C are arranged to the rear of these photo-electric elements 11A, 11B and 11C, and are connected to a battery 83 through separate variable resistances 82A, 82B and 82C, which not only serve to correct for variations between the respective light sources 12A, 12B and 12C and the distance differences in the case of projecting the light, but also adjust the detecting characteristics of the respective photo-electric elements 11A, 11B and 11C.

In this embodiment, in the state that the photo-electric elements 11A and 11C arranged in the front and rear positions are arranged sufficiently near the film 22, when the output level PB detected by the photo-electric element 11B is smaller than the output levels PA and PC of the photo-electric elements 11A and 11C arranged respectively to the front and rear of the element 11B, the lens 8 can be judged to be correctly focusing, whereas if PA is less than PB or PC is less than PB, focusing detection by simple analysis indicates that the photo-electric element 11B is not the correctly focusing position, and, in these cases, the lens 8 is moved respectively rearward or forward, as the case may be, to set the focusing correctly.

In the eleventh exemplary embodiment, shown in Figure 21, the light sources 12A, 12B and 12C of Figure 20 are replaced by a common light source 12 and right prisms 84A and 84C arranged on each side so that the light of the light source 12 will pass through a cover glass 84B arranged in front of the light source 12 to be projected forward through aperture 15B of the photo-electric element 11B, and light from this light source 12 will be deflected by the respective surfaces of the prisms 84A and 84C to pass through respective apertures 15A and 15C of the photo-electric elements 11A and 11C, and will be projected forward.

The operation and effect in this case are the same as for the above mentioned tenth embodiment. In an embodiment using these prisms 84A and 84C, the means of adjusting the light levels to the photo-electric elements 11A, 11B and 11C and correcting variations can be formed by selectively using the transmittivity of the prisms 84A and 84C by coating or masking, or by providing for adjustments in the detecting circuits for the respective photo-electric elements 11A, 11B and 11C.

Figure 22 shows the twelfth embodiment wherein many (seven in the illustration) photo-electric elements 86 having respective apertures 85 are arranged integrally on an inclined path from front to rear of the position 81 conjugate with the film 22 surface.

A filter 87 in the form of a lamina is bonded on the back surface of the light intercepting plates pasted to the back faces of the above mentioned photo-electric elements 86, and an elongate prism 88 is bonded to the back surface of this filter 87 so that a common light source 12 adjacent to one end of this prism 88 can inject light to be projected, multiplexly reflected by the inner surface of the prism 88, to pass through the filter 87 and be projected forward through the respective apertures 85. In this embodiment, in case of characteristics of the photo-electric elements 86 are different in the detecting level depending on the light projecting distance, if the photo-electric elements are so arranged as to vary the transmission characteristics of the filter 87, the characteristics at the time of detection will be able to be made nearly optimum.

In this embodiment, as many photo-electric elements 86 are arranged, the distance in the forward and rearward directions along the optical axis 7' between the adjacent photo-electric elements 86 can be made very small and, by comparing the output levels detected by these photo-electric elements 86, the precise focusing position can be detected. That is to say, as the position of the photo-electric element 86 of the minimum output level represents the focusing position, the deviation from the position 81 conjugate with the film 22 surface can be also detected, and indicate forward or rearward movement of the lens 8 to make the focusing state correct.

It is evident from the above description that the ninth to twelfth embodiments described with reference to Figures 17 to 22 are not limited to enclosure within the camera adapter 5, but may be contained in the camera 6, and can be utilised with optical devices such as a television camera, in which an image is to be formed on a predetermined image forming surface by using lenses.

Figure 23 shows a hard endoscope in which an embodiment of focusing state detection in accordance with the present invention is incorporated.

In an elongate insertion sheath, light guiding fibres 92 form illuminating-light transmitting means emitting the illuminating light from the tip and an observing optical system is provided wherein the image of such an object to be observed or photographed (indicated by an arrow 25) which may be an affected part in front of the insertion sheath 1 and is illuminated by the light emitted from the end surface of the above mentioned light-guiding fibres 92 to permit the image to be formed by an objective optical system 93, and the thus formed optical image transmitted to an eyepiece system 74 in an operating end-portion 95 by a relay optical system 94 serving as an image transmitting system to be observed by an observer or technician through the eyepiece optical system 74 arranged in the eyepiece section.

A light guiding entry port 2 is provided on the side of the operating part 95, and the light guiding fibres 92 passing through the insertion sheath 1 are fixed at the rear end so that an illuminating light may be transmitted from a light source 96 through a light guiding cable 62 fitted to this light guiding entry port 2.

In the operating part 95, a beam splitting means (corresponding to the above described semi-silvered mirror 9) is formed by joining two right prisms, 9A and 9B, arranged on the optical axis 7 on which an optical image will be formed by the rearmost lens 94' of a relay optical system 94. On the optical axis 7, to the rear of the beam splitting means, the eyepiece optical system 74 is arranged in a movable lens frame (not illustrated). An eyepiece window in the rear of the eyepiece optical system 74 is sealed by a cover glass 97.

A photo-electric element 11 in which a pinhole aperture 15 is formed is arranged in the position to the rear (above in the illustration) on an optical axis 7' incident along the optical axis 7 through the relay optical system 94 and deflected upwards by the beam-splitting means. Light guiding fibres 98 branch from the above mentioned light guiding fibres 92 within the hard endoscope 4 and are arranged so as to be positioned with the light-emitting end-face just behind the aperture of the axis 7'.

The above mentioned photo-electric element 11 is formed to be operatively connected with the eyepiece optical system 74 and is so set that, when the position in which the image of the object 25 to be photographed will be formed in is at a distance (about 25 cm from the observer) clearly visible through the eyepiece optical system 74, the position of the aperture of the photo-electric element 11 will be optically conjugate. In other words, both the eyepiece optical system 74 and photo-electric element 11 are so formed as to move forward and rearward as operatively connected with each other on the respective optical axes 7 and 7' so that, when the optical image transmitted and formed in front of the eyepiece optical system 74 by the relay optical system 94 is magnified and formed through the eyepiece optical system 74 in its required position (before being magnified) so as to be clearly visible, the aperture of the photo-electric element 11 will be in the position of the optical image on the optical axis 7' deflected by the beam splitting means. The eyepiece optical system 74 and photo-electric element 11 are so mounted as to be moved on their respective axes by rotating a focusing ring 73 formed on the outer periphery of the operating part 95.

Within the above mentioned operating part 95, there is a focusing detecting circuit 34 for detecting whether the detecting output of the photo-electric element 11 is of the minimum value or not, so that when the focusing detecting circuit 34 is judged to indicate the correct focusing state, the lamp 14 connected to the output end will be energised and the light will be reflected by the beam-splitting means and be incident at the side of the observing visual field so as to be sighted by an observer to the rear of the eyepiece optical system 74.

Figure 24 shows a soft endoscope, in which an embodiment of the present invention is incorporated.

Light guiding fibres 102 serve as illuminating light transmitting means inserted through the elongate pliable insertion sheath 101 of this soft endoscope (fibrescope) 100. An objective optical system 104 is arranged in the sheath, which is sealed by a cover glass 103 at the tip of the insertion sheath 101.

A lens 104' of a part of the above mentioned objective optical system 104 is mounted to be movable along the optical axis 7. Image guiding fibres 106 serve as image transmitting means (an image transmitting optical system) so arranged as to be positioned with an end surface forming an objective surface 105 near the position in which the image is formed by the objective optical system 104. An beam-splitting means 107 formed by joining two right prisms 107A and 107B is arranged so that one prism 107A contacts the objective surface 105.

The photo-electric element 11 in which an aperture 15' is formed and fitted to the rear surface of the other prism 107A on the optical axis 7' (upper in the illustration) that is deflected by the joining surface of both prisms 107A and 107B of the above mentioned beam-splitting means 107. The position of this aperture 15' and a surrounding photo-electric surface 17 is so arranged as to be conjugate with the objective surface 105 of the above mentioned image guiding fibres 106.

To the rear of the aperture 15', the emitting end surface of a few light guiding fibers 108 branched from the main group of light guiding fibres 102 passing through the insertion sheath 101 is present, so that the required focusing detecting illuminating light is emitted through the aperture 15'.

On the other hand, the image guiding fibres 106 are to transmit the optical image formed on the above mentioned objective surface 105 back to the operating part 109. Then a beam-splitting means 110 formed by joining two triangular prisms 110A and 110B, an eyepiece optical system 111 and eyepiece cover glass 112 are arranged in turn along the optical axis 7 to the rear of image guiding fibres 106. The eyepiece optical system 111 is so formed as to magnify and form the optical image presented an the rear end face of the image guiding fibres 106 in a clearly sighted distance from the observer. A lamp 14, which may be a LED or the like serves as a focusing indicating means arranged in the rear of a light intercepting plate 113 in which a pinhole is formed separated from the side surface of one triangular prism 110A forming the beam-splitting means 110, and is so formed that, when the lamp lights, the light of this lamp 14 will be deflected by the joining surface of the two triangular prisms 110A and 110B, to pass through one triangular prism 110A, and proceed via the eyepiece optical system 111 to the rear, and be sighted by the observer.

A focusing detecting circuit 34 for judging whether focusing is made or not with the detecting output of the photo-electric element 11 is contained in the operating part 109 so that, at the time of focusing, the lamp 14 will be energized by the output of the focusing detecting circuit 34.

On the focusing ring 73 formed on the outer periphery of the operating part 109, a ring-shaped member 115 fitted and fixed on the inner peripheral surface of the focusing ring 73 and having a spiral groove 114 formed on its inner periphery, is contained in a recess formed along the outer periphery of the operating part body 116 so as to be rotatable together with the above mentioned focusing ring 73.

A cam pin 117 has its tip contained in the above mentioned spiral groove 114, and a linear groove 118 along the optical axis 7 direction is formed in the operating part body 116 in which the recess is formed and the cam pin 117 provided to project on a slidable ring-shaped member 119 arranged inside the operating part body 116 passes through the above mentioned linear groove 118 and is arranged so as to be contained at the tip in the spiral groove 114.

A focusing means for the objective optical system is thus formed, so that when the focusing ring 73 is rotated and the ring-shaped member 119 having the cam pin 117 moves forward or rearward along the optical axis within the range of the linear groove, an objective 104' arranged at the tip end of the insertion sheath 101 through transmitting means such as a wire, will be operatively connected to move forward and rearward along the optical axis 7.

When the focusing ring 73 is rotated, the ring-shaped member 115 having the spiral groove 114 formed inside will rotate together, the cam pin 117 contained in this spiral groove 114 and formed so as to pass through the linear groove 118 will move forward or rearward according to the rotating direction along the linear groove 118, and the objective 104' will move with the ring-shaped member 119.

Rotation is continued until the position of the focusing ring 73 is in the required position, that is, the correct position for forming a clear optical image of the object to be photographed is formed by the objective optical system 104 is in the position of the entry surface 105 of the image guiding fibres 106 so that a clear image will be formed in the position of the aperture 15' conjugate with the position of the surface 105 on the optical axis 7' deflected and divided by the beam-splitting means 107. When the image is formed in this position, the focusing state will be judged correct by the focusing detecting circuit 34 and the lamp 14 will light up.

The beam-splitting means 107 and 110 may be semi-silvered mirrors.

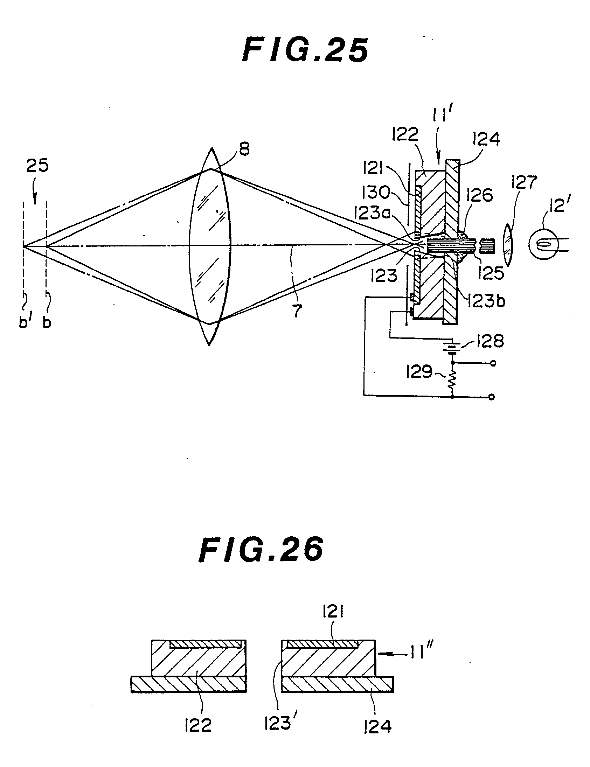

In the many embodiments above-described, the light is projected from an aperture such as the pinhole-shaped aperture 11 of Figure 2, and is received in some cases on a peripheral photo-electric surface 17 surrounding the aperture, and the light from the light source 12 may be projected directly via the aperture, but by forming the light projecting and receiving means as shown in Figure 25, correct focusing can be detected with even more precision.

An annular thin P-type semiconductor layer 121 is provided on a front surface of an N-type semiconductor base plate 122 into which there is etched a through hole 23 such as a pinhole or slit, formed to leave a thin wall portion to the front surface and so isolate the P-type layer 121 from any of the directly transmitted light yet to be described. Alternatively, an overall layer 121 may be provided, and the thin-walled isolating wall portion of N-type material subsequently formed in known manner.

A light intercepting plate 124 is provided with a hole communicating with the through hole 123 when secured to the back surface of the N-type layer 122 to form a photo-electric element 11' with its light-receiving layer 121. A bundle of fibres 125 are fixed by a sealing member 126 or the like, so as to pass in at one end of the through hole 123 and form an emitting surface therein. These fibres 125 are so formed at the other end that light incident from the light source lamp 12' via a condenser lens 127 will be projected to the object 25 through the front lens 8 or the like.

A battery 128 and resistance 129 are connected in series so as to reverse bias the PN junction between the P-type layer 121 and N-type layer 122 of the photo-electric element 11', so that, when light is incident upon the photo-electric surface formed by the P-type layer 121, the electric current flowing through the PN junction will vary in response to the light level and the current variation provides a voltage output signal across the resistance 129.

A light intercepting plate 130 is provided to prevent any unnecessary light being incident upon the photo-electric surface.

The through hole 123 formed by etching from the rear of the N-type layer 122 results in a tapered hole as illustrated, the diameter or width 123a of the through hole 123 at the photo-electric surface being smaller than the diameter or width 123b on the reverse side. Therefore the diameter or width 123a of the through hole 123 on the photo-electric surface side can be kept to match the diameter or width of the bundle of fibres 125, which is required for efficient light projection and focusing can be detected at a precision higher than that of a through hole expanding toward the photo-electric surface side, which would be produced by ordinary etching treatment, as shown by broken lines.

In the optical system arranged as mentioned above, when the object 25 to be photographed is in the position indicated by the line *b*, focusing will be correct and if the through hole expands on the photo-electric surface side, as shown by the broken lines, if the object 25 is in the position *b'* slightly displaced rearward from the position *b*, the light will still not reach the photo-electric surface, and therefore there will be no change in output across the resistance 129 and a correct focusing state will be assumed to be made. However, in the case of the tapered through hole 123 shown by the solid lines, in the case of the objection being at the position *b*, light will reach the photo-electric surface, and the nonfocused state will be distinguished. The focusing state can thus be detected with high precision.

The through hole 123 can be made by drilling from the back surface side with a drill having a tapered blade.

On the other hand, a photo-electric element 11'' can be formed by providing a through hole 123' of constant diameter or width, as shown in Figure 26, by machining using a drill or the like.

Even in this case, if the P-type layer 121 serving as a photo-electric surface is directly adjacent to the front peripheral edge of the through holes 123', the projected illuminating light will cause some light current to flow and and the light level of the reflected light from the object 25 is to be photographed will be difficult to accurately measure. Therefore, the peripheral wall surface of the through hole 123' is covered by a thin N-type layer formed by doping, or by initially forming an annular layer 121 with a central aperture of the required size. Alternatively, some form of light intercepting means, such as a coating material or thin pipe may be fitted to isolate the photo-electric surface from the directly projected light.

In the above description, the respective photo-electric surfaces of the photo-electric elements 11' are P-type layers, but if the polarity of the supply voltage is reversed, an N-type layer can be used as the photo-electric surface.

It is also evident that the present invention can be applied even in case the photo-electric element is formed of other semiconductors, such as CdS or CdSe.

The above described respective embodiments of the present invention can be applied not only to endoscope photographing devices fitted to endoscopes by camera adapters 5, photographic adapters or cameras 6, or directly, but can also be used with other optical devices wherein a clear image is to be formed on a predetermined image forming surface using lenses, for example, endoscopes incorporating the present invention, general photographic or television cameras and microscopes.

**Claims**

1. A device for detecting the focused state of an optical system (8) in which the image of an object (25) is formed on a predetermined surface (22) by said optical system (8) using a point light source to project light to the object (25) via said optical system (8) to be reflected by said object (25) and received back via said optical system (8) on a photo-electric transducer (11) having a relatively small aperture at a position that is substantially optically conjugate with said image forming surface (22), characterised in that said point light source is formed by at least one aperture (15; 55; 85; 123) in said photo-electric transducer (11).

2. A device as claimed in Claim 1, characterised in that said aperture is slit-shaped (Fig. 3).

3. A device as claimed in any preceding Claim, characterised in that the light illuminating said apertures (15; 55; 85; 123) is of a wavelength in the visible range.

4. A device as claimed in any preceding Claim, characterised in that the light illuminating said aperture (15; 55; 85; 123) is of a wavelength in the infrared range.

5. A device as claimed in any preceding Claim, characterised in that a plurality of apertures are formed in respective transducers stepped in the forward and rearward direction of the position conjugate with said image forming surface (Figs. 17 to 21).

6. A device as claimed in any one of Claims 1 to 4, characterised in that a plurality of apertures (85) are formed in a flat plate-shaped photo-electric converting surface (86) arranged inclined with respect to the position conjugate with said image forming surface (Fig. 22).

7. A device as claimed in any preceding Claim, characterised in that said aperture and said transducer (11) are contained in an endoscope (Figs. 23, 24).

8. A device as claimed in any one of Claims 1 to 7, characterised in that said aperture and said transducer (11) are contained in a camera adapter fitted to an endoscope (Fig. 8).

9. A device as claimed in any preceding Claim, characterised in that the focusing state can be set by moving at least one lens in said optical system (8) by controlling a driving means driven by an electric signal output from said photo-electric transducer (11).

10. A device as claimed in Claim 9, characterised in that said driving means is so controlled that said at least one lens is moved so that the electric signal output assumes a minimum value or maximum value.

11. A device as claimed in Claim 9, characterised in that said driving means is a motor fitted with a gear at the tip of a rotary shaft.

12. A device as claimed in Claim 11, characterised in that said motor of the driving device is contained in a photographic device fitted to an endoscope directly or by a camera adapter, and is so formed as to mesh the gear and the focusing ring of the endoscope with each other.

## Patentansprüche

1. Einrichtung zur Feststellung des Focuszustandes eine optischen Systems (8), in der das Bild eines Objektes (25) auf einer vorbestimmten Oberfläche (22) durch diese optische System (8) gebildet wird, wobei eine Punktlichtquelle dazu benutzt wird, Licht auf das objekt (25) über das optische System zu projizieren, so daß es durch das objekt (25) reflektiert und durch das optische System (8) wieder empfangen wird, auf einem photoelektrischen Umformer (11), der eine relativ kleine Öffnung aufweist, die sich in einer Position befindet, die im wesentlichen optisch mit der das Bild bildenden Oberfläche konjugiert, dadurch gekennzeichnet, daß die Punktlichtquelle durch wenigstens eine Öffnung (15; 55; 85; 123) in dem photoelektrischen Umformer (11) gebildet ist.

2. Einrichtung nach Anspruch 1, dadurch gekennzeichnet, daß die Öffnung schlitzförmig ist (Figur 3).

3. Einrichtung nach einem der vorstehenden Ansprüche, dadurch gekennzeichnet, daß das Licht, das die Öffnung (15; 55; 85; 123) beleuchtet, eine Wellenlänge im sichtbaren Bereich aufweist.

4. Einrichtung nach einem der vorstehenden Ansprüche, dadurch gekennzeichnet, daß das Licht, das die Öffnung (15; 55; 85; 123) beleuchtet, eine Wellenlänge im infraroten Bereich aufweist.

5. Einrichtung nach einem der vorstehenden Ansprüche, dadurch gekennzeichnet, daß eine Mehrzahl von Öffnungen in entsprechenden Umformern stufenweise vor und hinter der Position, die mit der das Bild formenden Oberfläche konjugiert, angeordnet sind (Figuren 17 bis 21).

6. Einrichtung nach einem der Ansprüche 1 bis 4, dadurch gekennzeichnet, daß eine Mehrzahl von Öffnungen (85) in einer flachen plattenförmigen photoelektrisch wandelnden Oberfläche (86) angeordnet sind und zwar geneigt in bezug auf die Position, die mit der das Bild bildenden Oberfläche konjugiert (Figur 22).

7. Einrichtung nach einem der vorstehenden Ansprüche, dadurch gekennzeichnet, daß die Öffnung und der Umformer (11) in einem Endoskop angeordnet sind (Figur 23, 24).

8. Einrichtung nach einem der Ansprüche 1 bis 7, dadurch gekennzeichnet, daß die Öffnung und der Umformer (11) in einem Kameraadapter angeordnet sind, der mit einem Endoskop verbunden ist (Figur 8).

9. Einrichtung nach einem der vorstehenden Ansprüche, dadurch gekennzeichnet, daß der Focuszustand durch Bewegung wenigstens einer Linse des optischen Systems (8) einstellbar ist durch Steuerung eines Antriebes, der durch ein elektrisches Ausgangssignal vom photoelektrischen Umformer (11) antreibbar ist.

10. Einrichtung nach Anspruch 9, dadurch gekennzeichnet, daß der Antrieb so steuerbar ist, daß wenigstens eine Linse bewegbar ist, so daß das elektrische Ausgangssignal einen Minimal- oder Maximalwert annimmt.

11. Einrichtung nach Anspruch 9, dadurch gekennzeichnet, daß der Antrieb aus einem Motor und einem Getriebe an der Spitze einer Welle besteht.

12. Einrichtung nach Anspruch 11, dadurch gekennzeichnet, daß der Motor der Antriebseinrichtung in einer Photoeinrichtung enthalten ist, die direkt an ein Endoskop oder einen Kameraadapter angechlossen und so ausgerichtet ist, daß das Getriebe und der Focusring des Endoskops miteinander kämmen.

## Revendications

1. Dispositif pour détecter l'état focalisé d'un système optique (8), dans lequel l'image d'un objet (25) est formée sur une surface prédéterminée (22) au moyen dudit système optique (8) moyennant l'utilisation d'une source de lumière ponctuelle servant à projeter la lumière en direction de l'objet (25) par l'intermédiaire dudit système optique (8), afin que cette lumière soit réfléchie par ledit objet (25) et soit reçue en retour, par l'intermédiaire dudit système optique (8), sur un transducteur photoélectrique (11) possédant une ouverture relativement petite et situé dans une position qui est sensiblement la position conjugée du point de vue optique de ladite surface (22) de formation de l'image, caractérisé en ce que ladite source de lumière ponctuelle est formée par au moins une ouverture (15; 55; 85; 123) située dans ledit transducteur photoélectrique (11).

2. Dispositif selon la revendication 1, caractérisé en ce que ladite ouverture est en forme de fente (figure 3).

3. Dispositif selon l'une quelconque des revendications précédentes, caractérisé en ce que la lumière éclairant ladite ouverture (15; 55; 85; 123) possède une longueur d'onde située dans le domaine visible.

4. Dispositif selon l'une quelconque des revendications précédentes, caractérisé en ce que la lumière éclairant ladite ouverture (15; 55; 85; 123) possède une longueur d'onde située dans le domaine de l'infrarouge.

5. Dispositif selon l'une quelconque des revendications précédentes, caractérisé en ce qu'une pluralité d'ouvertures sont ménagées dans des transducteurs respectifs qui sont échelonnés vers l'avant et vers l'arrière par rapport à la position conjuguée de ladite surface de formation de l'image (figures 17 à 21).

6. Dispositif selon l'une quelconque des revendications 1 à 4, caractérisé en ce qu'une pluralité d'ouvertures (85) sont formées dans une surface de conversion photoélectrique (86) en forme de plaque plane, qui est inclinée par rapport à la position conjuguée de ladite surface de formation de l'image (figure 22).

7. Dispositif selon l'une quelconque des revendications précédentes, caractérisé en ce que ladite ouverture et ledit transducteur (11) sont logés dans un endoscope (figures 23, 24).

8. Dispositif selon l'une quelconque des revendications 1 à 7, caractérisé en ce que ladite ouverture et ledit transducteur (11) sont logés dans un adaptateur d'un appareil de prise de vues, monté sur un endoscope (figure 8).

9. Dispositif selon l'une quelconque des revendications précédentes, caractérisé en ce que l'état de focalisation peut être réglé par déplacement d'au moins une lentille située dans ledit système optique (8), sous l'effet de la commande de moyens d'entraînement qui sont commandés par un signal électrique délivré par ledit transducteur photoélectrique (11).

10. Dispositif selon la revendication 9, caractérisé en ce que lesdits moyens d'entraînement sont commandés de telle sorte que ladite lentille, présente en au moins un exemplaire, est déplacée de telle sorte que le signal électrique délivré prend une valeur minimale ou une valeur maximale.

11. Dispositif selon la revendication 9, caractérisé en ce que lesdits moyens d'entraînement sont constitués par un moteur équipé d'un pignon situé au niveau de l'extrémité d'un arbre rotatif.

12. Dispositif selon la revendication 11, caractérisé en ce que ledit moteur du dispositif d'entraînement est logé dans un appareil photographique monté sur un endoscope directement par l'intermédiaire d'un adaptateur d'appareil de prise de vues, et est agencé de manière à faire engrener réciproquement le pignon et la bague de focalisation de l'endoscope.

# FIG.1

# FIG.2

# FIG.3

# FIG.4

1

# FIG.5

# FIG.6

# FIG.7

2

0 080 340

# FIG. 8

3

# FIG.9

# FIG.10

# FIG.11

# FIG.12

## (a)

12

57 18
18A
55A 17' 55B

## (b)

17' 55B
55A
18A

# FIG.13

61

62

23

24

c b a 1 2 7

4 3 63 8 5 64 22

25 21 11 12 15 18 6

17

# FIG.14

# FIG.15

0 080 340

# FIG.16

# FIG.17

7

# FIG.18

# FIG.19

### (a)

### (b)

# FIG.20

# FIG.21

# FIG.22

# FIG.23

# FIG.24

# FIG.25

# FIG.26